# EUROPEAN PATENT SPECIFICATION

(11) **EP 1 693 609 B1**
(45) Date of publication and mention of the grant of the patent: **09.01.2013**
(21) Application number: 06100086.5
(22) Date of filing: 04.01.2006
(51) Int. Cl.: F16L 23/10

(54) **A pipe coupling clamp**
Rohrkupplungsschelle
Collier de serrage pour raccord de tuyaux

(30) Priority: 18.02.2005 EP 05394005; 07.10.2005 IE 20050682
(43) Date of publication of application: 23.08.2006
(73) Proprietor: Henry, John Julian, County Roscommon (IE)
(72) Inventor: Henry, John Julian, County Roscommon (IE)
(74) Representative: O'Connor, Michael Donal

(56) References cited:
- DE-A1- 19 757 969
- GB-A- 736 879
- GB-A- 2 268 561
- US-A- 2 937 893
- US-A- 3 954 251
- US-A- 6 056 332

## Description

### Introduction

The present invention relates to a pipe coupling clamp comprising a pair of clamp halves substantially C-shaped in cross-section, and grooved to receive mating flanges of two pipes to be coupled, the clamp halves being hinged together at one pair of ends and releasably connected together at the other pair of ends by a locking eyebolt and associated nut, which locking eyebolt is hingedly connected at its proximal end within an open support jaw on the end of one clamp to allow it to pivot through a receiving slat which is connected to an open securing jaw on the end of the other clamp half.

In the pharmaceutical and food industries, it is a requirement that liquids be transported, stored and processed in sanitary conditions. It is common to use stainless steel pipes and containers with closures. The joining of such pipes and the closing of such containers is not generally done with threaded connectors or closures because of the risk of contamination due to the use of threads. Many stainless steel containers are manufactured with access ports that terminate with flange connections. It is common to connect lengths of pipe, each having a flange, together. There are many clamping mechanisms or coupling clamps used to clamp the mating flanges of two pipes or indeed of the access port of a container and a flange closure together.

Unfortunately, in certain instances, the standard and well known clamp, such as that described above, can be disengaged accidentally, for example, by somebody brushing against the nut which is usually a wing nut. Unfortunately, after the wing nut is bosened, then the whole eyebolt can pivot outwards and thus cause the two clamp halves to disengage. Sometimes, even if it is not accidental knocked, the wing nut can unscrew over time, with much the same effect. The problem is if, for example, the pipes are transporting corrosive or very hot liquids, serious injuries can occur. It is not too bad, for example, if it is a small leak that occurs as this usually can be seen by operatives and the position rectified. However, the problem arises when the clamp totally disengages and then there can be serious consequences.

A further problem is to prevent unauthorised personnel from opening such closures or indeed disengaging such pipe ends.

Furthermore, due to the nut associated with such clamps unscrewing over time, or as a result of mishaps during installation of clamps, it is possible for the nut to accidentally become separated from the clamp, which may result in it being accidentally dropped into a vessel or an un-sanitised area of a plant room. This will normally result in costly "shut down" times. Further problems arise in relation to the use of pipes coupled by such clamps, as it is difficult for maintenance engineers to identify hazardous materials which the pipes coupled by the clamps are transporting.

It is known in the art to provide various constructions of such coupling clamps, such as, for example, that described and claimed in US Patent No. 6056332 (Foster). Many of these type of couplings have been designed to provide rapid action closure, such as, for example, US Patent No. 6672631 (Weinhold). There are further designs for which a constant clamping pressure is maintained, even under changes in temperature and changes in internal pressure behind the flange connection. A typical example of this is described in US Patent Application No. US 2002/0185869A1 (Lin). To overcome the problem of, for example, the pipes completely separating if the bolt were to fall during use, it is known to provide a safety strap, such as described in UK Patent No. 1104922 (Avica). A further type of clamp construction is described in German Patent No. 19757969 (Linnemann). This document describes a rapid action closure in conjunction with integrated clamping and release portions. These prior art configurations for clamps are however complex arrangements which are difficult to cleanly finish and are possibly not totally safe.

It is therefore an object of the present invention to provide an improved construction of pipe coupling clamp of the aforesaid type which goes someway toward overcoming at least the above problems, and/or which will provide the public and/or industry with a useful choice.

It is acknowledged that the term 'comprise' may, under varying jurisdictions be provided with either an exclusive or inclusive meaning. For the purpose of this specification, and unless otherwise noted explicitly, the term comprise shall have an inclusive meaning - i.e. that it may be taken to mean an inclusion of not only the listed components it directly references, but also other non-specified components. Accordingly, the term 'comprise' is to be attributed with as broader interpretation as possible within any given jurisdiction and this rationale should also be used when the terms 'comprised' and/or 'comprising' are used.

Further aspects of the present invention will become apparent form the ensuing description which is given by way of example only.

### Statements of invention

According to the invention, there is provided a pipe coupling clamp comprising a pair of clamp halves substantially C-shaped in cross-section, and grooved to receive mating flanges of two pipes to be coupled, the clamp halves being hinged together at one pair of ends and releasably connected together at the other pair of ends by a locking eyebolt and associated locking eyebolt nut, which locking eyebolt is hingedly connected at its proximal end within an open support jaw on the end of one clamp half to allow it to pivot through a receiving slot into an open securing jaw, which is connected to the end of the other clamp half characterised in that the locking eyebolt comprises at its proximal end an elongate eyebolt seating portion which extends out of the open support jaw terminating in a stepped threaded portion of reduced diameter at its distal end, and in which the receiving slot is of reduced size to receive the stepped threaded portion and the securing jaw comprises an enlarged inner socket to snugly receive the eyebolt seating portion.

The advantage of this is that if the locking nut disengages slightly from the locking eyebolt, the clamps halves will not separate, even under pressure, and thus the coupling will remain in position preventing, in many instances, serious injury, Furthermore, as there is no requirement to mill clamp releasing recesses in the locking eyebolt the resulting clamp will be significantly stronger than prior art clamps (such as the clamp described in Linnemann), the locking eyebolt being significantly weakened by such milling, Additionally, having clamp releasing recesses milled into the locking eyebolt will also reduce the bearing surface provided by the locking eyebolt, which will also further reduce the coupling strength of the clamp. Furthermore, milling or machining recesses in the locking eyebolt will cause ragged metal fins or burring on the locking eyebolt, which burring must be removed by specialist tools in order to get a clean finish along the bolt to ensure free movement of the nut along the screw threaded portion. The provision of a locking eyebolt having an elongate eyebolt seating portion connected to a screw threaded portion which acts as a clamp release portion will eliminate the requirement for such additional finishing and eliminate the other problems described above.

Additionally, the provision of a continuous screw threaded portion on the locking eyebolt will ensure that during tightening the nut engages fully around the periphery of the locking eyebolt. This is particularly advantageous when compared to bolts having integrated recesses acting as a clamp release portion (such as is the case in the clamp described in Linnemann), as these boils are prone to 'gauling' which causes the nut to stick to threaded portion in the recessed region on the bolt during tightening. Such 'gauling' will typically occur when dirt or some other loose object gets caught within the bolt recesses preventing the free movement of the nut along the threaded portion in the region of the bolt recesses.

In one embodiment of the invention, the locking eyebolt nut is a wing nut.

In one embodiment of the invention, the elongate eyebolt seating portion is substantially the same size as the enlarged inner socket to provide a force fit between them.

In another embodiment of the invention, the clamp further comprises a stop for preventing movement of the nut off the stepped threaded portion, which stop is secured to the free end of the stepped threaded portion of the locking eyebolt.

The advantage of this is that the clamp is assembled as a fully integrated complete component in which the nut can be loosened significantly to allow the clamp to be released and opened, but in which the stop will prevent the nut from being completely removed from the clamp. This will prevent the problem of the nut dropping into a vessel or unsanilised area of a plant room. Moreover, such a feature will also ensure that the individual components of the clamp cannot be separated which will eliminate costly "shut-down" times for retrieval of separable clamping components,

In another embodiment of the invention, the nut comprises a bore having an internal threaded portion integrally connected to a widened portion of increased size, the internal threaded portion for engaging with the stepped threaded portion and the widened portion for engaging around a portion of the inner bolt seating portion.

In another embodiment of the invention, the clamp comprises a colour coding which identifies the medium flowing through the pipes coupled by the clamp.

Preferably, the colour coding comprises a coloured plastic coating on the nut and stop. Colour coding the clamps in this way will enable maintenance engineers to identify specific hazardous materials which are transported through pipes coupled by the clamps. Such an identification system will be particularly useful for pre-warning engineers of any likely hazard areas within the plant room.

In another embodiment of the invention, the locking eyebolt nut engages the clamp half through a clamp engaging cylindrical nut receiving socket having a bored washer forming base.

In this latter embodiment, ideally the socket includes a lock receiving hole whereby a lock has to be removed to access the nut.

Again, with these latter embodiments, the nut may be a domed nut comprising a cylindrical inner portion and an outer hexagonal portion.

In one embodiment of the invention, the clamp halves are hinged together by a connector plate pivotally mounted on each clamp half.

In another embodiment, there is a pair of spaced-apart connector plates is mounted on each side of the clamp halves by pivot pins.

### Detailed Description of the Invention

The invention will be more clearly understood from the folloving description of some embodiments thereof, given by way of example only, with reference to the accompanying drawings, in which:
Fig. 1 is a perspective view, partially disassembled, of a pipe coupling clamp according to the invention,
Fig. 2 is a perspective view showing the clamp about to be closed,
Fig. 3 is a sectional view in the direction of the arrows III-III of Fig. 1,
Fig. 4 is a sectional view of the pipe coupling clamp shown in Fig. 2,
Fig. 5 is a sectional view of a wing-nut used in conjunction with the pipe coupling clamp shown in Figs. 1 to 4.
Fig. 6 is a sectional view similar to Fig. 3 of an alternative construction of clamp according to the invention,
Fig. 7 is an exploded view of a still further pipe coupling clamp according to the invention,
Fig. 8 is a perspective view of the assembled pipe coupling clamp of Fig. 7,
Fig. 9 is a perspective view of a still further pipe coupling clamp, partially disassembled, according to the invention,
Figs. 10 to 12 are perspective views showing the clamp depicted in Fig. 9 being closed,
Fig. 13 is a sectional view of the pipe coupling clamp shown in Fig. 12.

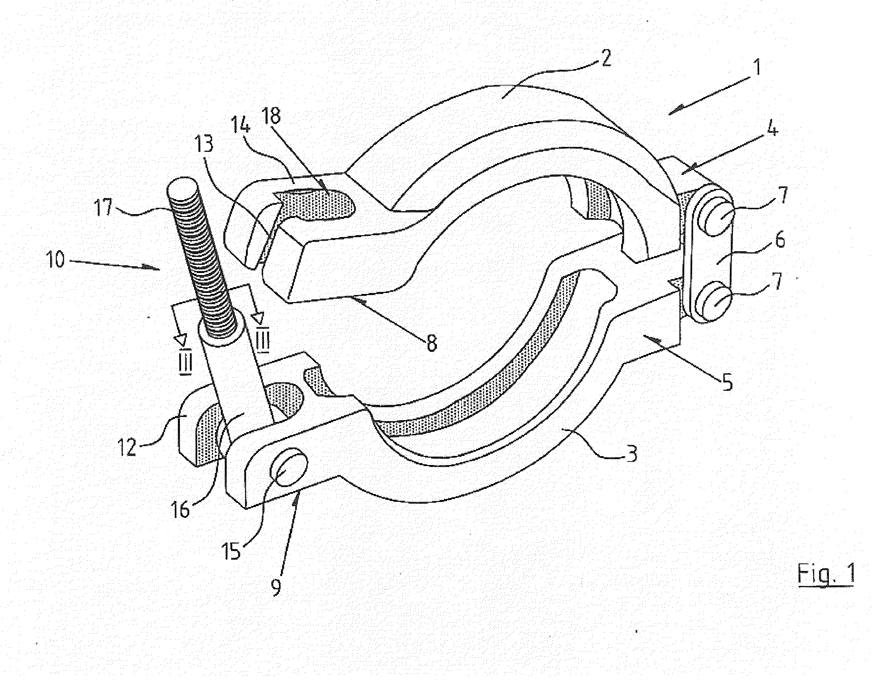

Referring to the drawings and initially to Figs. 1 to 3 thereof, there is provided a pipe coupling clamp, indicated generally by the reference numeral 1, comprising a pair of substantially C-shaped clamp halves 2, 3 hinged together at one pair of ends, indicated generally by the reference numerals 4 and 5, by a pair of connector plates 6 mounted by means of pivot pins 7 on each clamp half 2 and 3. The clamp halves 2 and 3 are releasably connected together at the other pair of ends, indicated generally by the reference numerals 8 and 9, by a locking eyebolt, indicated generally by the reference numeral 10, and associated locking eyrbolt nut 11. The locking eyebolt 10 is hingedly connected at its proximal end within an open support jaw 12 on the end 9 of the clamp half 3 to allow it to pivot through a receiving slot 13 into an open securing jaw 14 connected to the end 8 of the other clamp half 2. The locking eyebolt 10 is hingedly connected within the open support jaw 12 by a hinge pin 15.

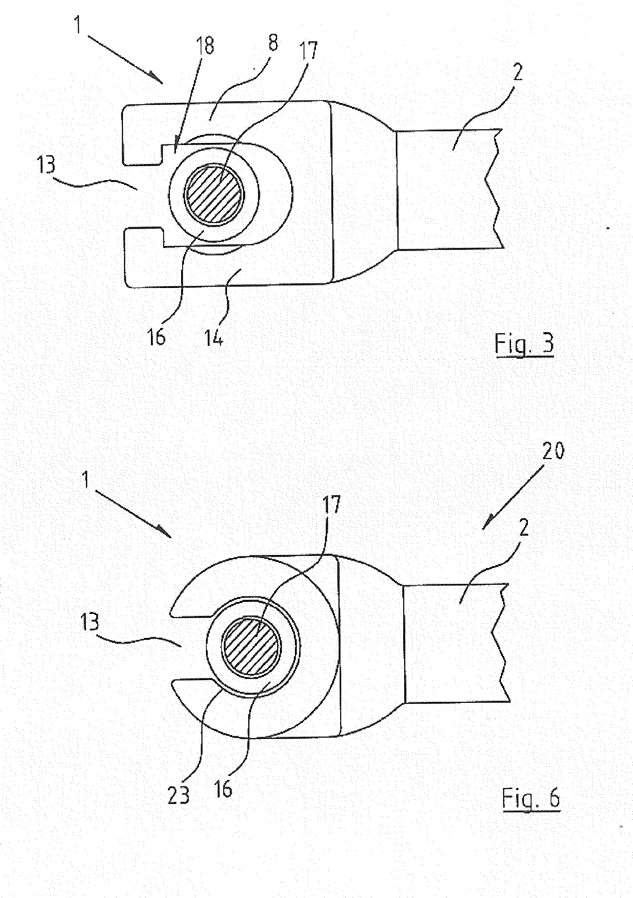

The locking eyebolt 10 comprises, at its proximal and an elongate eyebolt seating portion 16 which extends out of the open support jaw 12 terminating in a stepped threaded portion 17 of reduced diameter as its distal end. The receiving slot 13 is of a reduced size to receive the stepped threaded portion 17 and the securing jaw 14 comprises an enlarged inner socket indicated generally by the reference numeral 18, of a size sufficient to snugly receive the elongate eyebolt seating portion 16. This can be seen clearly from Fig. 3.

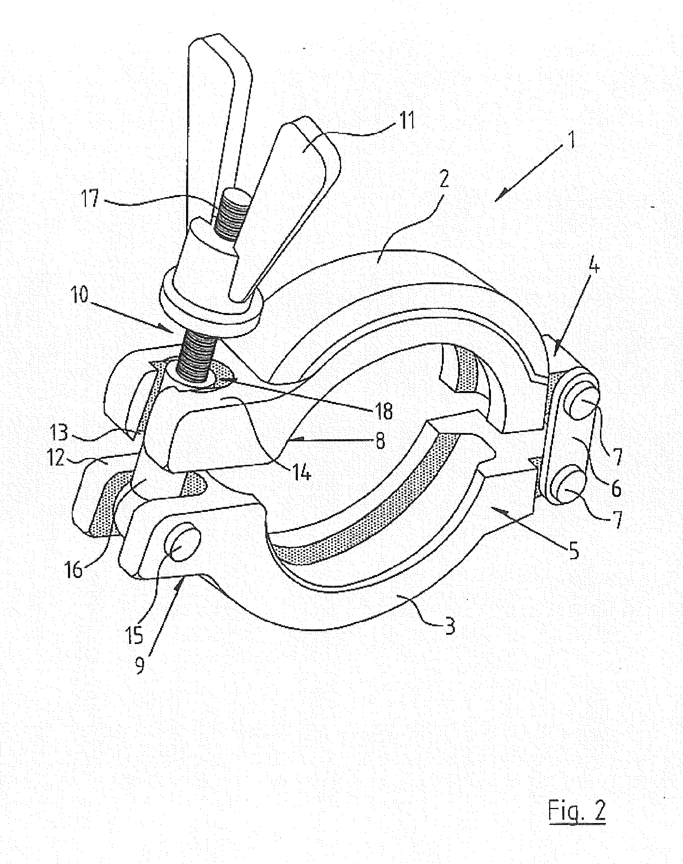

The locking eyebolt 10 is provided with an associated threaded nut, in this case a wing nut 11 (see Fig. 2). As can be seen from Figs, 1 and 2, the ends 8, 9 of the clamp halves 2, 3 can only be secured together by initially passing the threaded portion 17 through the slot 13 so that it comes to rest in the enlarged socket 18 of the securing jaw 14. The securing jaw 14 is then moved down the locking eyebolt 10 by an operator applying a pushing force to the claim half 2 and the wing nut 11 is then tightened down until a portion of the eyebolt sealing portion 16 is drawn up into the socket 18. With the coupling clamp 1 firmly in position, it will be appreciated that even if the wing nut 11 loosens somewhat, the clamp halves will not separate. A further advantage with the construction is that it makes it relatively easy for the clamp 1 to be placed in position and held by itself as the wing nut 11 is tightened.

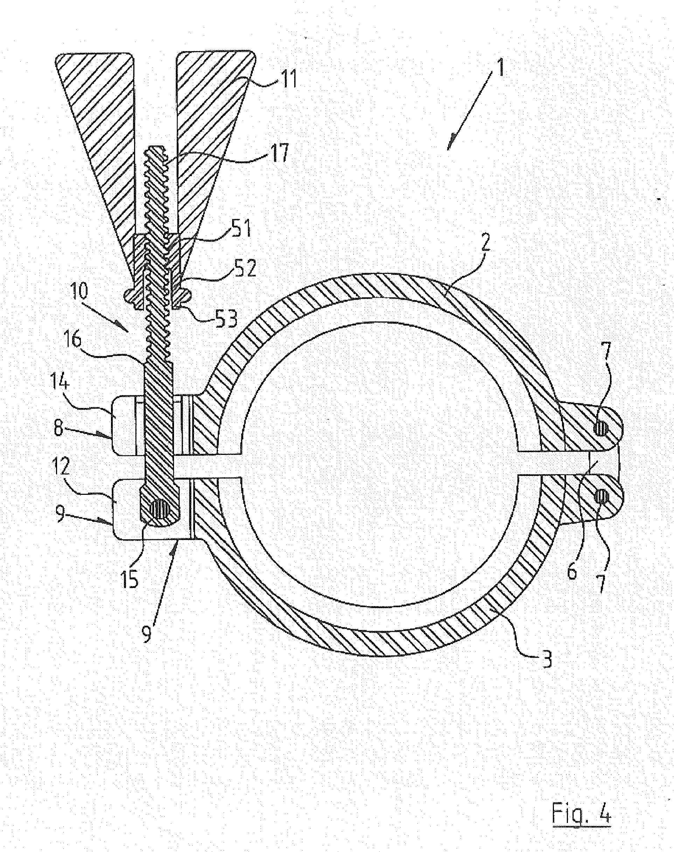

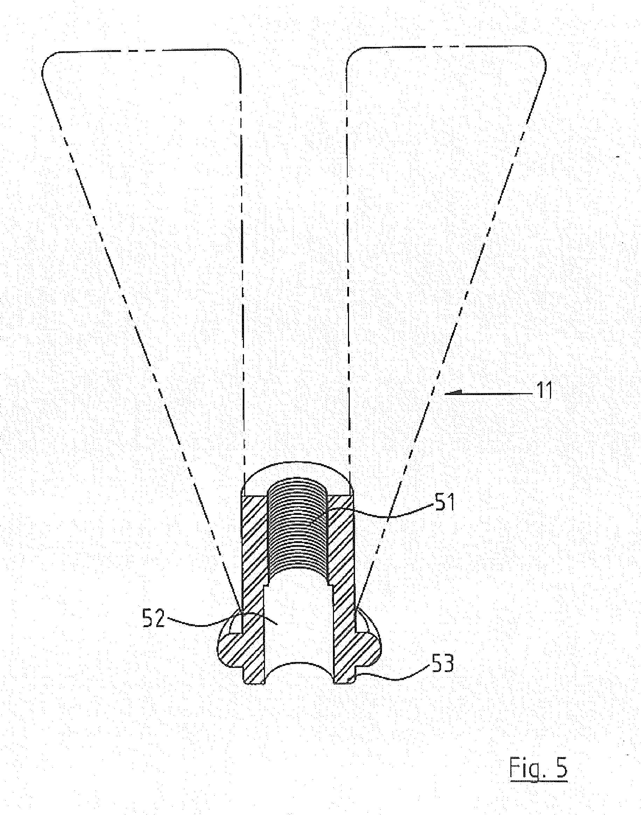

With reference to Figs. 4 and 5, the wing nut 11 comprises an internal threaded portion 51 integrally connected to a widened portion 52 of increased size so that as the wing nut 11 is tightened on the locking eyebolt 10 (see Fig. 2) the internal threaded portion 51 will engage with the stepped threaded portion 17 during tightening. The widened portion 52 has a size sufficient to ensure that it does not engage with the stepped threaded portion 17 during tightening of the wing nut 11. Depending on the extent of tightening required the widened portion 52 may engage around an upper portion of the eyebolt seating portion 16.

Referring to Fig. 6, there is illustrated an allemative construction of pipe coupling clamp, indicated generally by the reference numeral 20, which pipe coupling clamp 20 has a modified form of enlarged inner socket, identified by the reference numeral 23, which has a circular cross-section. Such a configuration provides a frictional or force-fit for the locking eyebolt 10 within the socket 23. Parts similar to those described with reference to Figs. 1 to 3 are identified by the same reference numerals.

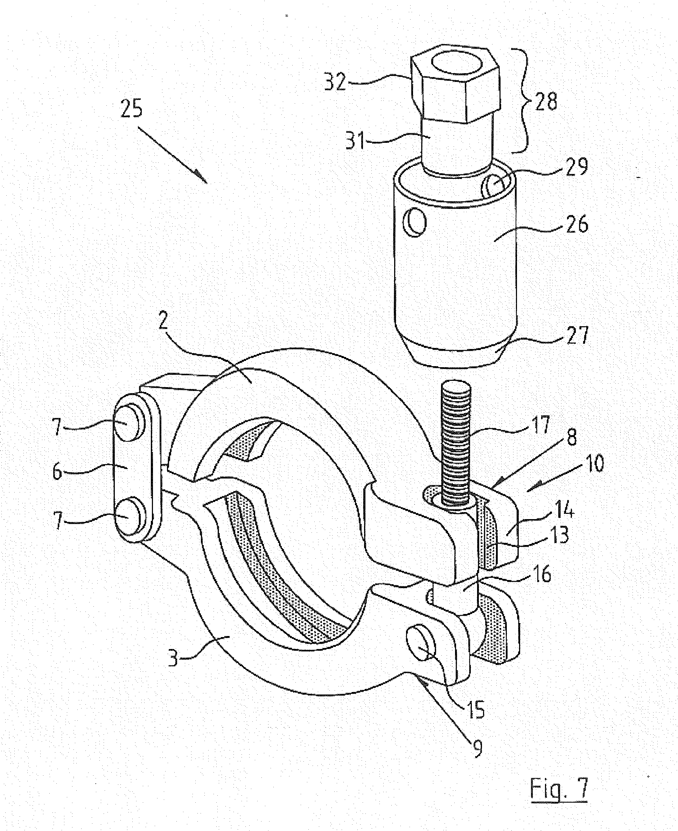

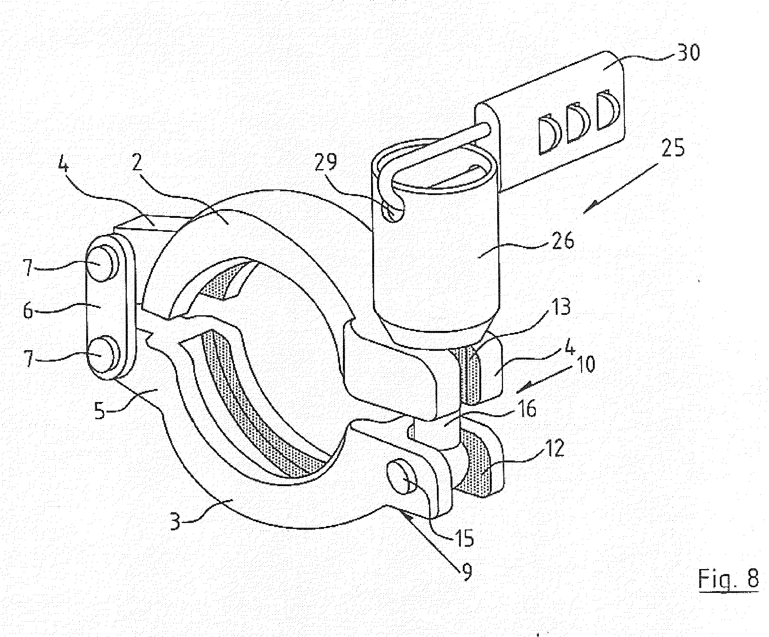

Referring now to Figs. 7 and 8, there is illustrated a still further construction of pipe coupling clamp, indicated generally by the reference numeral 25, in which parts similar to those described with reference to the previous drawings, are identified by the same reference numerals. In this embodiment, the locking eyebolt 10 engages a cylindrical nut receiving socket 26 having a bored washer forming base 27, into which a nut 28 projects to engage the threaded portion 17 of the locking eyebolt 10. The cylindrical nut receiving socket 26 has a pair of axially arranged through holes 29 for reception of a lock 30, as shown in Fig. 8. The nut 28 is a domed nut having a cylindrical inner portion 31 and an outer hexagonal portion 32.

The pipe coupling clamp shown in Figs, 7 and 8 operates in exactly the same way as the pipe coupling clamp of the previous embodiments, except that now the nut 28 can be retained in position and prevented from unauthorised tampering by the lock 30.

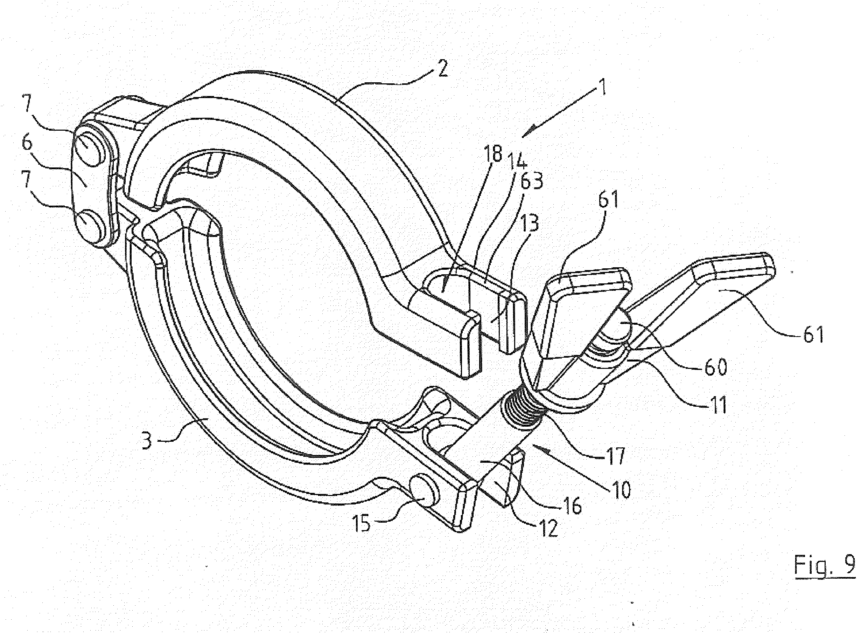

Referring now to Fig. 9, there is illustrated a pipe coupling clamp similar to that shown in Figs. 1 to 4, again identified by the same reference numeral 1 with parts similar to those described in Figs. 1 to 4 already identified by the same reference numerals, in the embodiment shown, the clamp 1 further comprises a stop 60 which is secured to the free end of the stepped threaded portion 17 of the locking eyebolt 10. The size of the stop 60 is larger than the bore of the wing nut 11 so that, in use, it will prevent movement of the wing nut 11 off the stepped threaded portion 17 when the clamp 1 is disassembled or during opening.

In the instance shown, the pipe coupling clamp 1 also comprises a colour coding system for easy identification of a medium flowing through pipes coupled by the clamp 1. In the instance shown, the colour coding comprises a coloured plastic coating which, in the instance shown, is on the stop 60 and on the wings 61 of wing nut 11.

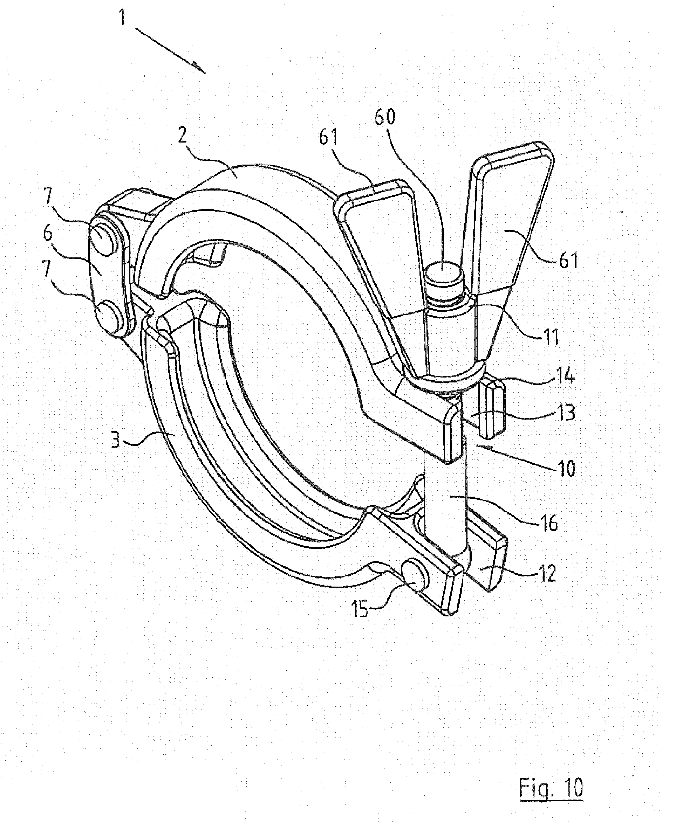

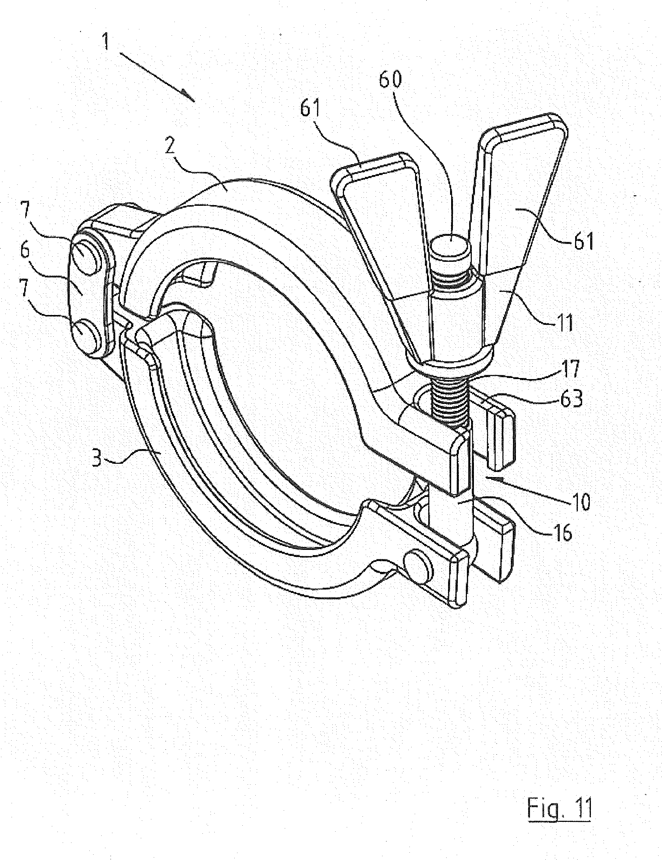

Figs. 10 to 12 further illustrate the pipe coupling clamp 1 shown in Fig. 9 being progressively closed, which closing occurs in exactly the same way as the pipe coupling clamp shown in Figs. 1 to 4 is also closed.

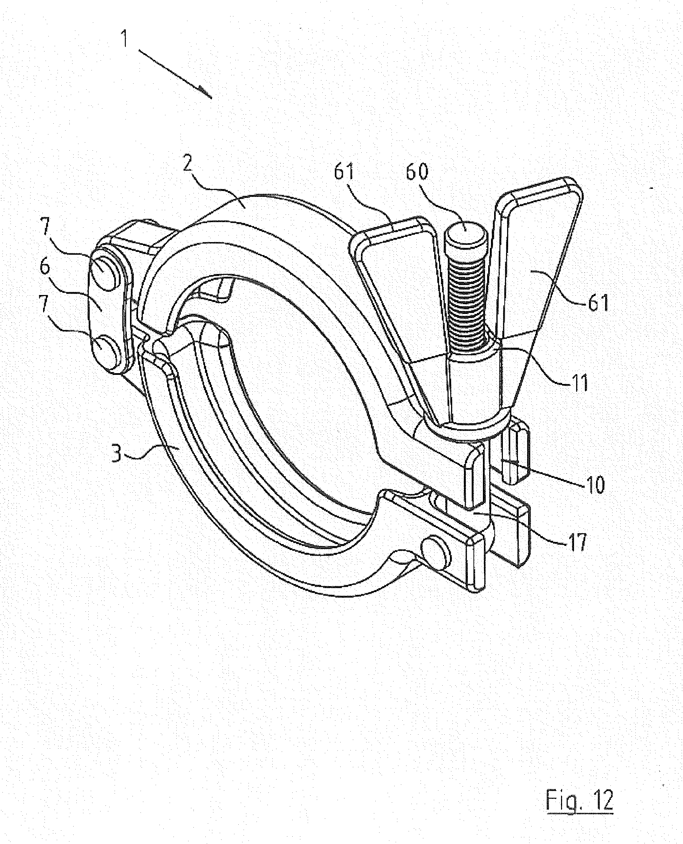

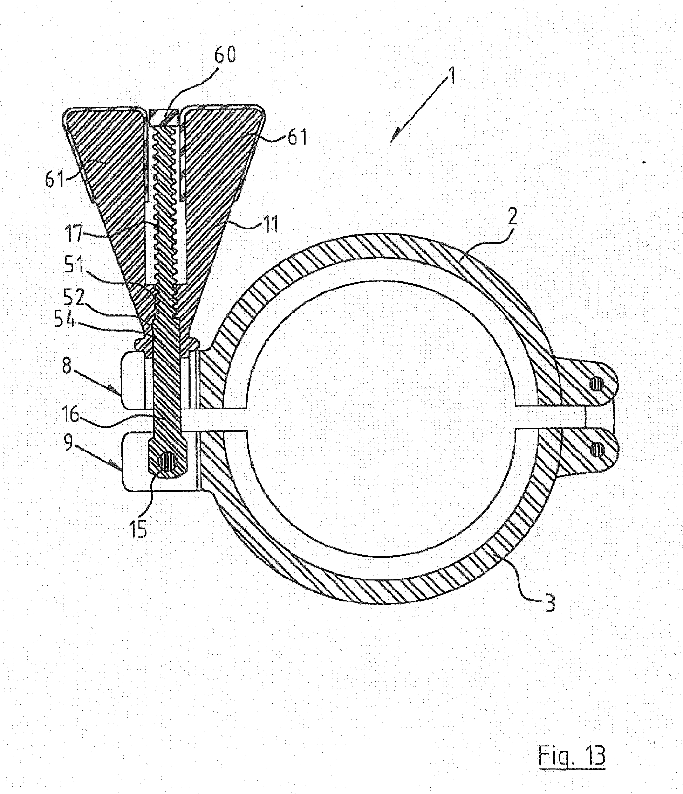

With reference now to Fig. 13, there is shown the clamp of Fig. 12 again identified by the same reference numeral 1 with parts similar to those described already identified by the same reference numerals. As the wing nut 11 is tightened down the stepped threaded portion 17 it may, depending on the size of the pipes being coupled and the extent of tightening required, draw a portion of the eyebolt seating portion 16 up into the wing nut 11. Accordingly, as the wing nut 11 is tightened the internal threaded portion 51 of the bore of the wing nut 11 will similarly move down the stepped threaded portion 17, and in some instances, the widened portion 52 will seat on the top portion 54 of the eyebolt sealing portion 16. The end 8 of the clamp half 2 also comprises grooves 63 to snugly seat the nut 11 (see Fig. 9).

The invention is not limited to the embodiment hereinbefore described, but may be varied in both construction and detail within the scope of the claims.

## Claims

1. A pipe coupling clamp (1) comprising a pair of clamp halves (2,3) substantially C-shaped in cross-section, and grooved to receive mating flanges of two pipes to be coupled, the clamp halves (2,3) being hinged together at one pair of ends (4,5) and releasably connected together at the other pair of ends (8,9) by a locking eyebolt (10) and associated nut (11), which locking eyebolt (10) is hingedly connected at its proximal end within an open support jaw (12) on the end (9) of one clamp half (3) to allow it to pivot through a receiving slot (13) into an open securing Jaw (14) which is connected to the end (8) of the other clamp half (2) **characterised in that** the locking eyebolt (10) comprises, at its proximal end, an elongate eyebolt seating portion (16) which extends out of the open support jaw (12) terminating in a stepped threaded portion (17) of reduced diameter at its distal end, and in which the receiving slot (13) is of reduced size to receive the stepped threaded portion (17) and the securing jaw (14) comprises an enlarged inner socket (18) to snugly receive the eyebolt seating portion (16),

2. A clamp (1) as claimed in claim 1, in which the locking eyebolt nut (10) is a wing nut (11).

3. A clamp (1) as claimed in claim 1, in which the elongate eyebolt seating portion (10) is substantially the same size as the enlarged inner socket (18) to provide a force fit between them.

4. A clamp (1) as claimed in claim 1, further comprising a stop (60) for preventing movement of the nut (11) off the stepped threaded portion (17), which stop (60) is secured to the free end of the stepped threaded portion (17) of the locking eyebolt (10).

5. A clamp (1) as claimed in claim 1, in which the nut (11) comprises a bore having an internal threaded portion (51) integrally connected to a widened portion (52) of increased size, the internal threaded portion (51) for engaging with the stepped threaded portion (17) and the widened portion (52) for engaging around a portion of the eyebolt seating portion (16).

6. A clamp (1) as claimed in claim 1, further comprising a colour coding which identifies the medium flowing through the pipes coupled by the clamp (1).

7. A clamp (1) as claimed in claim 4, in which the colour coding comprises a coloured plastic coating on the nut wings (61) and stop (60).

8. A clamp (25) as claimed in claim 1, in which the locking eyebolt nut (28) engages the clamp half (2) through a clamp engaging cylindrical nut receiving socket (26) having a bored washer forming base (27).

9. A clamp (25) as claimed in claim 8, in which the socket (26) includes a lock receiving hole (29) whereby a lock (30) has to be removed to access the nut (28).

10. A clamp (25) as claimed in claim 8 or 9, in which the nut (28) is a domed nut comprising a cylindrical inner portion (31) and an outer hexagonal portion (32).

11. A clamp (1,25) as claimed in any preceding claim, in which the ends (4,5) of the clamp halves (2,3) are hinged together by a connector plate (6) pivotally mounted on each clamp half (2,3).

12. A clamp (1,25) as claimed in claim 11, in which a pair of spaced-apart connector plates (6) are mounted on each side of the clamp halves (2,3) by pivot pins (7).

## Patentansprüche

1. Eine Rohrkupplungsschelle (1) mit zwei Schellenhälften (2,3), deren Querschnitt im Wesentlichen C-förmig ist und mit Nuten zum Aufnehmen gepaarter Flansche von zwei zu kuppelnden Rohren, wobei die Schellenhälften (2,3) an einem Paar von Enden (4,5) aneinander angelenkt sind und an dem anderen Paar von Enden (8,9) durch eine Verriegelungsringschraube (10) und zugehörige Mutter (11) lösbar miteinander verbunden werden, wobei die Verriegelungsringschraube (10) gelenkig an ihrem proximalen Ende innerhalb einer offenen Stützbacke (12) an dem Ende (9) einer Schellenhälfte (3) verbunden ist, um Schwenken derselben durch den Aufnahmeschlitz (13) in eine offene Befestigungsbacke (14) zuzulassen, die mit dem Ende (8) der anderen Schellenhälfte (2) verbunden ist, **dadurch gekennzeichnet, dass** die Verriegelungsringschraube (10) an ihrem proximalen Ende einen länglichen Ringschraubensitzteil (16) besitzt, der sich aus der offenen Stützbacke (12) heraus erstreckt, welche in einem abgestuften Gewindeteil (17) mit reduziertem Durchmesser an seinem entfernten Ende endet, und bei der der Aufnahmeschlitz (13) eine verringerte Größe zum Aufnehmen des abgestuften Gewindeteils (17) hat, und die Befestigungsbacke (14) eine vergrößerte Innenfassung (18) besitzt, um den Ringschraubensitzteil (16) eng anliegend aufzunehmen.

2. Eine Schelle (1) gemäß Anspruch 1, in der die Verriegelungsringschraubenmutter (10) eine Flügelmutter (11) ist.

3. Eine Schelle (1) gemäß Anspruch 1, in der der längliche Ringschraubensitzteil (10) im Wesentlichen die gleiche Größe besitzt wie die vergrößerte Innenfassung (18), um einen Festschluss zwischen beiden herzustellen.

4. Eine Schelle (1) gemäß Anspruch 1, die darüber hinaus über einen Anschlag (60) verfügt, um eine Bewegung der Mutter (11) vom abgestuften Gewindeteil (17) zu verhindern, wobei der Anschlag (60) am freien Ende des abgestuften Gewindeteils (17) der Verriegelungsringschraube (10) befestigt ist.

5. Eine Schelle (1) gemäß Anspruch 1, in der die Mutter (11) eine Bohrung mit einem Innengewindeteil (51) besitzt, der integriert mit einem erweiterten Teil (52) erhöhter Größe verbunden ist, wobei der Innengewindeteil (51) für den Kontakt mit dem abgestuften Gewindeteil (17) und der erweiterte Teil (52) für den Kontakt um einen Teil des Ringschraubensitzteils (16) vorgesehen ist.

6. Eine Schelle (1) gemäß Anspruch 1 mit einer Farbcodierung, die das Medium anzeigt, das die von der Schelle (1) verbundenen Rohre durchfließt.

7. Eine Schelle (1) gemäß Anspruch 4, an der die Farbcodierung einen farbigen Kunststoffüberzug auf den Flügelmuttern (61) und dem Anschlag (60) umfasst.

8. Eine Schelle (25) gemäß Anspruch 1, in dem die Verriegelungsringschraubenmutter (28) den Kontakt mit der Schellenhälfte (2) mittels einer Schelle herstellt, und die zylindrische Mutter aufnehmende Fassung (26) über eine Lochscheibe bildende Basis (27) verfügt.

9. Eine Schelle (25) gemäß Anspruch 8, in der die Fassung (26) ein Schlossaufnahmeloch (29) enthält, durch das ein Schloss (30) für den Zugang zur Mutter (28) entfernt werden muss.

10. Eine Schelle (25) gemäß Anspruch 8 oder 9, in der es sich bei der Mutter (28) um eine gewölbte Mutter mit einem zylindrischen Innenteil (31) und einem äußeren hexagonalen Teil (32) handelt.

11. Eine Schelle (1,25) gemäß vorheriger Ansprüchen, in der die Enden (4,5) der Schellenhälften (2,3) mittels einer Verbinderplatte (6) aneinander angelenkt sind, die schwenkbar an jeder Schellenhälfte (2,3) angebracht ist.

12. Eine Schelle (1,25) gemäß Anspruch 11, in der zwei beabstandete Verbinderplatten (6) mittels Schwenkstifte (7) auf beiden Seiten der Schellenhälften (2,3) angebracht sind.

## Revendications

1. Collier de raccord de tube (1) comprenant une paire de moitiés de collier (2,3) sensiblement en forme de C en coupe transversale, et rainuré pour recevoir des brides correspondantes de deux tubes à raccorder, les moitiés de collier (2,3) étant articulées ensemble au niveau d'une paire d'extrémités (4,5) et raccordées de manière libérable au niveau de l'autre paire d'extrémités (8,9) par un boulon à oeil de verrouillage (10) et un écrou associé (11), lequel boulon à oeil de verrouillage (10) est raccordé de manière articulée au niveau de son extrémité proximale dans une mâchoire de soutien ouverte (12) sur l'extrémité (9) d'une moitié de collier (3) afin de lui permettre de pivoter à travers une fente de réception (13) dans une mâchoire de fixation ouverte (14) qui est raccordée à l'extrémité (8) de l'autre moitié de collier (2) **caractérisé en ce que** le boulon à oeil de verrouillage (10) comprend, au niveau de son extrémité proximale, une partie d'assise oblongue de boulon à oeil (16) qui s'étend hors de la mâchoire de soutien ouverte (12) se terminant en une partie filetée échelonnée (17) de diamètre réduit au niveau de son extrémité distale, et dans lequel la fente de réception (13) est de taille réduite pour recevoir la partie filetée échelonnée (17) et la mâchoire de fixation (14) comprend une fiche intérieure élargie (18) pour recevoir de manière ajustée la partie d'assise de boulon à oeil (16).

2. Collier (1) selon la revendication 1, dans lequel l'écrou du boulon à oeil de verrouillage (10) est un écrou à oreilles (11).

3. Collier (1) selon la revendication 1, dans lequel la partie d'assise oblongue de boulon à oeil (10) est sensiblement de la même taille que la fiche intérieure élargie (18) pour assurer un serrage par adhérence entre elles.

4. Collier (1) selon la revendication 1, comprenant en outre une butée (60) destinée à empêcher le mouvement de l'écrou (11) hors de la partie filetée échelonnée (17), laquelle butée (60) est fixée à l'extrémité libre de la partie filetée échelonnée (17) du boulon à oeil de verrouillage (10).

5. Collier (1) selon la revendication 1, dans lequel l'écrou (11) comprend un alésage ayant une partie filetée intérieure (51) intégralement raccordée à une partie élargie (52) de taille augmentée, la partie filetée intérieure (51) étant destinée à se mettre en prise avec la partie filetée échelonnée (17) et la partie élargie (52) destinée à se mettre en prise autour d'une partie de la partie d'assise du boulon à oeil (16).

6. Collier (1) selon la revendication 1, comprenant en outre un codage en couleur qui identifie le milieu s'écoulant à travers les tubes raccordés par le collier (1).

7. Collier (1) selon la revendication 4, dans lequel le codage en couleur comprend un revêtement en plastique coloré sur les oreilles d'écrou (61) et la butée (60).

8. Collier (25) selon la revendication 1, dans lequel l'écrou du boulon à oeil de verrouillage (28) met en prise la moitié de collier (2) à travers une fiche de réception d'écrou cylindrique de mise en prise de collier (26) ayant une base de formation à rondelle alésée (27).

9. Collier (25) selon la revendication 8, dans lequel la fiche (26) comprend un trou de réception de verrou (29) moyennant quoi un verrou (30) doit être retiré pour accéder à l'écrou (28).

10. Collier (25) selon la revendication 8 ou 9, dans lequel l'écrou (28) est un écrou bombé comprenant une partie intérieure cylindrique (31) et une partie extérieure hexagonale (32).

11. Collier (1,25) selon l'une quelconque des revendications précédentes, dans lequel les extrémités (4,5) des moitiés de collier (2,3) sont articulées ensemble par une plaque de connexion (6) montée de manière pivotante sur chaque moitié de collier (2,3).

12. Collier (1,25) selon la revendication 11, dans lequel une paire de plaques de connexion espacées (6) est montée de chaque côté des moitiés de collier (2,3) par des tourillons (7).
